# DEMANDE DE BREVET EUROPEEN

(11) **EP 2 149 641 A1**
(43) Date de publication de la demande: **03.02.2010**
(21) Numéro de dépôt: 09164504.4
(22) Date de dépôt: 03.07.2009
(51) Int. Cl.: E03B 3/03, A01G 27/02

(54) **Système de réserve d'eau de pluie formé par une pluralité de réservoirs connectés entre eux**

(30) Priorité: 29.07.2008 FR 0855212
(71) Demandeur: Rheolia, 57380 Faulquemont (FR)
(72) Inventeur: Provot, Jean-Michel, 57500 Saint Avold (FR)
(74) Mandataire: Brungard, Yves Francois

(57) **Abrégé**

Un système de réserve d'eau, en particulier d'eau de pluie, comporte au moins un alignement de réservoirs (1) connectés entre eux. Chaque réservoir (1) comporte en partie supérieure un bac (11) apte à contenir un substrat et des plantes, l'alignement comportant une face latérale apparente (13) et une face latérale de soutènement (14), opposée à la face latérale apparente (13), en contact avec le terrain naturel.

## Description

L'invention concerne un système de réserve d'eau, en particulier d'eau de pluie, formé par une pluralité de réservoirs connectés entre eux.

On ne démontre plus l'intérêt de collecter l'eau de pluie pour la stocker dans une réserve, afin de l'utiliser par la suite pour des usages ne nécessitant pas une eau purifiée, par exemple pour l'arrosage des jardins.

De tels systèmes pouvant être volumineux, on a cherché à rendre esthétique l'aspect de ces réserves. Diverses formes de réservoirs ont été imaginées, telles que la forme d'un énorme pot de fleurs, une colonnade entière ou une demi-colonnade à placer le long d'un mur, la forme d'un menhir ou d'un rocher... Ces éléments restent encombrants et ne peuvent pas s'adapter à toutes les contraintes que chacun peut rencontrer.

Dans le document JP 10 54061, on propose d'aligner des réservoirs de forme parallélépipèdes rectangles en rehausse d'un muret. Les réservoirs communiquent entre eux en partie inférieure. Chaque réservoir comporte un évent.

Il a aussi été proposé par le document DE 20 2004 013 751 U1 de constituer une réserve d'eau de pluie par l'assemblage de réservoirs sous la forme d'un muret. Chaque réservoir a la forme d'une brique dont l'aspect imite la pierre. Les réservoirs sont en communication entre eux par des tubes traversant les parois adjacentes des réservoirs en partie basse. Un évent est prévu dans l'un des réservoirs placé en hauteur.

De telles réserves ne permettent pas de liberté d'agencement des réservoirs entre eux. En effet, les réservoirs sont nécessairement alignés de manière rectiligne. De plus, une fois que les réservoirs sont assemblés entre eux, les connexions ne sont plus accessibles, ce qui ne facilite pas la maintenance de la réserve. Enfin, ce système ne permet pas de gérer le trop-plein, l'eau en excédent s'écoulant par l'évent de l'un des réservoirs. Ceci nécessite de prévoir un collecteur pour évacuer l'eau du trop-plein ou de surveiller le remplissage et d'agir manuellement sur l'alimentation en eau de la réserve.

Pour collecter l'eau de pluie, on connaît des collecteurs qui se connectent sur une descente de chêneau et qui permettent la connexion d'un réseau d'alimentation de la réserve. Le document DE 195 28 393 montre un exemple de collecteur, dans lequel, lorsque le réseau d'alimentation est saturé, l'eau de pluie est évacuée par la descente de chêneau. Avec un tel collecteur et si le débit dans le réseau d'alimentation s'arrête lorsque la réserve est pleine, on est capable de gérer le trop-plein de la réserve.

L'invention vise donc à fournir un système de réserve d'eau avec une bonne intégration paysagère et une liberté d'agencement du système, qui permette une bonne gestion du trop-plein, et qui soit facile à maintenir.

Avec ces objectifs en vue, l'invention a pour objet un système de réserve d'eau, en particulier d'eau de pluie, comportant au moins un alignement de réservoirs connectés entre eux, **caractérisé en ce que** chaque réservoir comporte en partie supérieure un bac apte à contenir un substrat et des plantes, l'alignement comportant une face latérale apparente et une face latérale de soutènement, opposée à la face latérale apparente, en contact avec le terrain naturel.

On réalise ainsi une bonne intégration paysagère du système de réserve. En effet, l'alignement de réservoirs peut être placé en habillage d'un talus ou d'un monticule, la face de soutènement permettant de retenir le terrain naturel. L'alignement n'est pas nécessairement rectiligne, mais il peut aussi être courbe, voire en courbe fermée. L'eau de pluie ne ruisselle pas directement sur le talus, ce qui évite un ravinement et stabilise le talus. Le terrain naturel peut être aussi de la terre déplacée et terrassée. Le bac en partie supérieure du réservoir permet de recevoir une plantation de fleurs ou de plantes décoratives dans un substrat adapté. On peut ainsi obtenir une végétalisation quasi complète du talus ou du monticule.

Le réservoir est un corps creux qui peut être en matière synthétique. Il peut être obtenu par soufflage d'une matière thermoplastique ou par rotomoulage.

De manière particulière, les réservoirs sont connectés entre eux par un réseau d'alimentation en eau et par un réseau d'évent. Le réseau d'alimentation permet de fournir l'eau à chaque réservoir et de vider ensuite cette eau. Le réseau d'évent permet l'évacuation de l'air pendant le remplissage des réservoirs, et inversement. De plus, si on place un orifice du réseau d'évent à une altitude supérieure à celle d'un collecteur qui alimente le réseau d'alimentation, l'eau en excédent ne peut pas s'évacuer par le réseau d'évent. Le débit dans le système de réserve est alors annulé et l'eau de pluie peut être évacuée par le réseau normal de collecte de l'eau de pluie.

Selon une caractéristique avantageuse, le réseau d'alimentation comporte un système de connexion pour connecter deux réservoirs adjacents en partie inférieure, le système de connexion comportant un manchon d'alimentation faisant saillie d'une paroi du réservoir et un tuyau d'alimentation emmanché à chaque extrémité sur le manchon de l'un des réservoirs. Un tel système de connexion n'impose pas de position relative des réservoirs adjacents. L'orientation relative et la distance peuvent être ajustées en fonction des contraintes du terrain en choisissant un tuyau d'alimentation souple de longueur adéquate.

Les manchons sont par exemple obtenus lors de la fabrication du réservoir par soufflage ou rotomoulage. Dans ce cas, le manchon est obtenu obturé. Seuls les manchons qui seront utilisés sont débouchés, par une coupe de l'extrémité ou par contreperçage. Les manchons non utilisés restent bouchés, et aucune mesure n'est à prévoir pour maintenir l'étanchéité des réservoirs.

Selon une disposition particulière, les réservoirs comportent un évidement dans lequel le manchon fait saillie, le tuyau étant apte à se loger dans les évidements de deux réservoirs juxtaposés. Le réseau d'alimentation peut ainsi être formé entre les réservoirs sans déborder au delà du volume normal des réservoirs. En outre, les réservoirs peuvent être placés en contact entre eux par leurs faces d'extrémité. Ceci permet une bonne intégration du système. De plus, le tuyau dans les évidements reste accessible pour des opérations de maintenance, par exemple pour changer le tuyau s'il est percé, ou resserrer un collier de maintien du tuyau sur le manchon.

Par exemple, l'évidement est réalisé à un angle inférieur d'une face d'extrémité du réservoir.

De manière particulière, l'évidement comporte une face de support orientée vers le côté de la face de soutènement et portant le manchon d'alimentation. Ainsi, le manchon d'alimentation et le tuyau sont moins visibles du côté de la face apparente.

Selon une autre caractéristique avantageuse, le réseau d'évent comporte un système de connexion d'évent pour connecter deux réservoirs adjacents, le système de connexion d'évent comportant au moins un manchon d'évent faisant saillie dans le bac et un tuyau emmanché à chaque extrémité sur le manchon de l'un des réservoirs. La connexion d'un tuyau est ainsi réalisée à l'intérieur du bac, ce qui permet de la recouvrir par une plante ou du substrat et la masquer ainsi. La connexion reste cependant facilement accessible en dégageant simplement la plante ou le substrat. Il n'est pas nécessaire de déplacer un autre élément du système.

Selon une disposition particulière, les réservoirs comportent un passage entre une face d'extrémité et le bac, le tuyau étant apte à se loger dans les passages de deux réservoirs juxtaposés. Le tuyau peut ainsi être placé sans dépasser de la face supérieure des réservoirs.

Le passage a par exemple la forme d'une échancrure ou d'un tunnel.

Selon une disposition particulière, le réservoir d'une rangée supérieure comporte une feuillure le long d'un bord inférieur de la face apparente, une arête d'un réservoir de la rangée adjacente inférieure étant placée dans ladite feuillure. Ainsi, lorsqu'on réalise l'aménagement d'un talus, on dispose au moins deux rangées, la rangée supérieure étant en retrait par rapport à la rangée inférieure. Le réservoir de la rangée supérieure peut être mis en appui sur la feuillure contre un réservoir de la rangée inférieure, ce qui assure un calage et une plus grande stabilité dudit réservoir.

L'invention a également pour objet un réservoir pour réaliser un système de réserve tel que décrit précédemment.

L'invention sera mieux comprise et d'autres particularités et avantages apparaîtront à la lecture de la description qui va suivre, la description faisant référence aux dessins annexés parmi lesquels :
- la figure 1 est une vue générale d'un aménagement conforme à l'invention ;
- la figure 2 est une vue en perspective d'un système de réserve conforme à l'invention ;
- la figure 3 est une vue en perspective d'un évidement d'un réservoir du système de la figure 2 ;
- la figure 4 est une vue en perspective d'un deuxième mode de réalisation d'un réservoir.

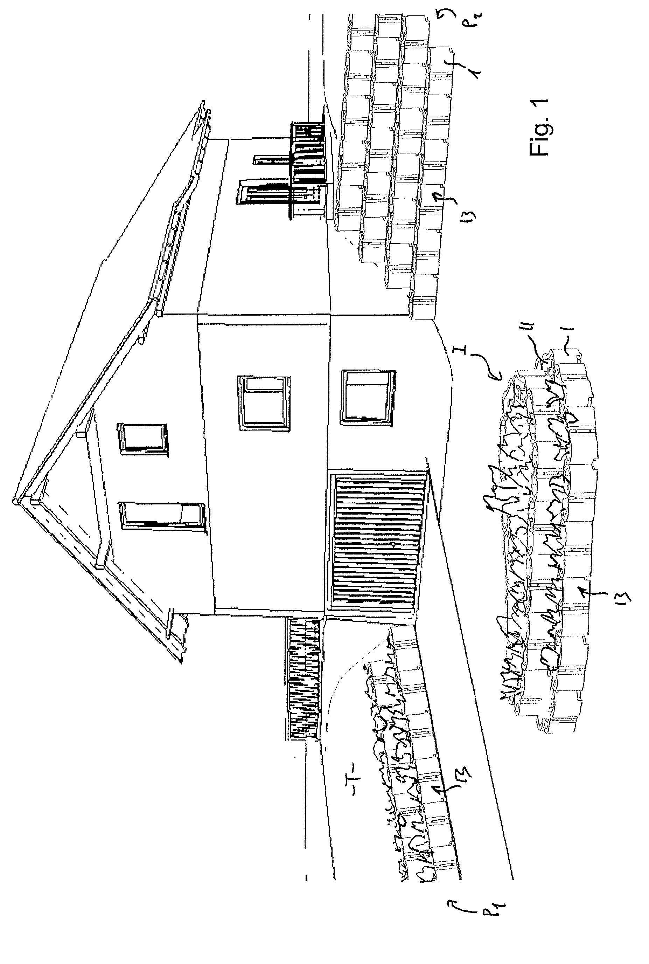

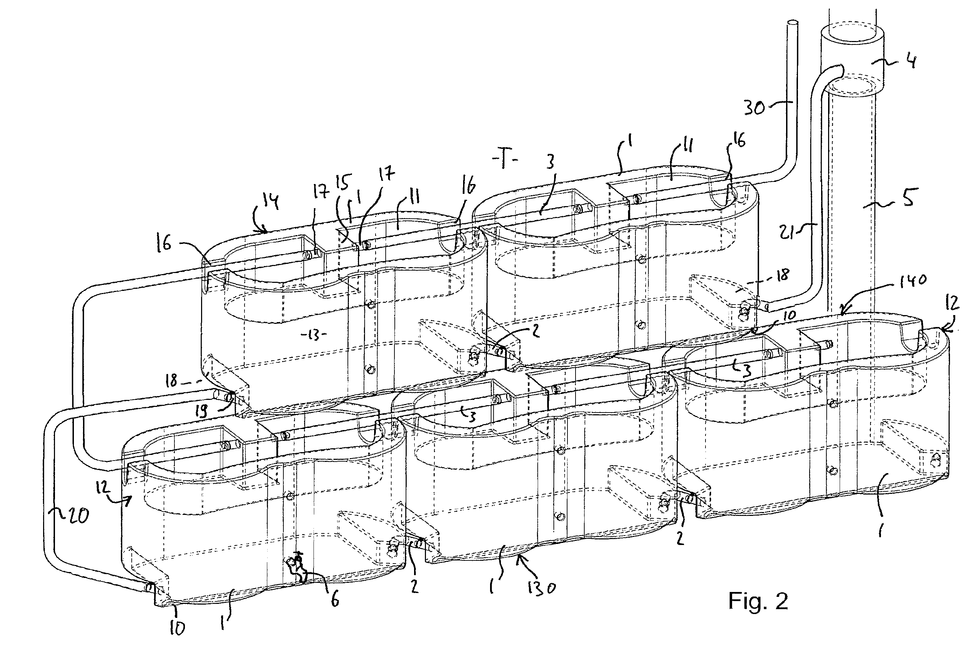

Le système de réserve conforme à l'invention est formé de plusieurs réservoirs 1 disposés par exemple dans un jardin de manière à créer un aménagement paysager, tel que montré sur la figure 1. Les réservoirs 1 sont disposés en plusieurs alignements en aboutant des faces d'extrémité 12 des réservoirs 1. Les réservoirs 1 présentent une face latérale apparente 13, tandis que une face latérale de soutènement 14, opposée à la face latérale apparente 13, est en contact avec de la terre du terrain naturel T. Chaque réservoir 1 comporte une forme de cuvette en partie supérieure, de manière à former un bac 11 apte à recevoir un substrat tel que de la terre et des plantes. Aussi, afin de laisser libre l'ouverture du bac 11, les alignements de réservoirs 1 sont décalés à la manière des marches d'un escalier comme on peut le voir à la fois pour un aménagement en ilot I, un aménagement en talus P1 à deux rangées de réservoirs et un aménagement en talus P2 à quatre rangées de réservoirs. Les réservoirs 1 comportent également une feuillure 10 le long du bord inférieur 130 de la face apparente, de manière à pouvoir prendre appui contre le bord supérieur 140 le long de la face de soutènement 14 du réservoir placé au-dessous, comme on peut le voir sur la figure 2 en particulier.

Les réservoirs 1 sont des volumes fermés, reliés entre eux par un réseau d'alimentation, connecté en partie basse des réservoirs 1, et par un réseau d'évent connecté en partie haute des réservoirs 1. Le réseau d'alimentation comporte un collecteur 4 pour capter de l'eau de pluie et la fournir au réseau d'alimentation. Un tel collecteur 4 est par exemple du type tel que décrit dans le document DE 195 28 393, ou avec des fonctions équivalentes. Il est connecté sur une descente de chêneaux 5.

Une échancrure 16 relie le bac 11 et chacune des faces d'extrémité 12 du réservoir 1. Le réservoir 1 comporte un bloc 15 faisant saillie dans le bac 11. Deux manchons d'évent 17 font saillie du bloc dans le bac 11 et sont orientés en direction de l'échancrure 16 leur faisant respectivement face.

Le long du bord inférieur de chaque face d'extrémité 12, le réservoir 1 comporte un évidement 18. L'évidement 18 comporte une face de support de laquelle un manchon d'alimentation 19 fait saillie, la face de support 180 étant orientée vers le côté de la face de soutènement 14, de manière à ce que le manchon d'alimentation 19 soit peu visible depuis le côté de la face apparente.

Le réseau d'alimentation comporte sur la face apparente un robinet de piquage 6 afin de prélever de l'eau contenue dans les réservoirs 1 au point le plus bas. Un autre robinet, non représenté, peut être placé plus haut, de manière à pouvoir déverser de l'eau dans un seau ou un arrosoir.

Dans l'exemple de la figure 2, le réseau d'alimentation comporte des tuyaux d'alimentation 2 qui relient des réservoirs 1 juxtaposés. Les tuyaux d'alimentation 2 sont connectés sur les manchons d'alimentation 19. Un tuyau d'extrémité 20 relie un réservoir 1 à l'extrémité d'une rangée au réservoir 1 à l'extrémité de la rangée inférieure. De plus, un autre tuyau 21 relie le collecteur 4 au réservoir 1 d'extrémité de la rangée supérieure.

Le réseau d'évent comporte des tuyaux d'évent 3 qui relient des réservoirs 1 juxtaposés. Les tuyaux d'évent 3 sont connectés sur les manchons d'évent 17, s'étendent à travers le bac 11 et traversent l'échancrure 16. Le réseau d'évent comporte un tuyau 30 dont l'extrémité 301 débouche au-dessus du collecteur 4. Cette ouverture 301 est la seule du réseau d'évent. Ainsi l'ensemble des réservoirs 1 peut être mis en légère pression, en fonction de la différence d'altitude entre le collecteur 4 et le réservoir 1, ainsi que du niveau de remplissage.

Les tuyaux sont maintenus sur les manchons par des colliers de serrage, non représenté.

Lorsque le collecteur 4 fournit de l'eau dans le réseau d'alimentation, l'eau arrive dans le bas du premier réservoir 1 de la rangée supérieure, puis se répartit dans les autres réservoirs 1 et les remplit en passant par les tuyaux d'alimentation 2 reliant les manchons d'alimentation 19. L'air est chassé par le réseau d'évent. L'eau remonte finalement dans le réseau d'évent jusqu'au niveau du collecteur 4 par le principe des vases communicants et le débit dans le système de réserve s'arrête lorsque l'eau a rempli le réseau d'évent.

La forme générale des réservoirs 1 n'est pas nécessairement celle représentée, elle peut être adaptée de manière à permettre un emboîtement des réservoirs 1 entre eux, par exemple en ligne droite ou courbe, en cercle, en mur ou en escalier.

Les réservoirs 1 peuvent être obtenus par rotomoulage ou par extrusion soufflage. Ils sont de préférence en matière thermoplastique telle que du polypropylène ou du polyéthylène. Ils ont un volume typiquement de 30 à 100 1. Les manchons 17, 19 sont fabriqués avec un opercule à leur extrémité. Avant la connexion des tuyaux, l'opercule est retiré en coupant l'extrémité du manchon ou en le contreperçant. Ainsi, on peut prévoir des manchons supplémentaires qui seront utilisés uniquement en cas de besoin.

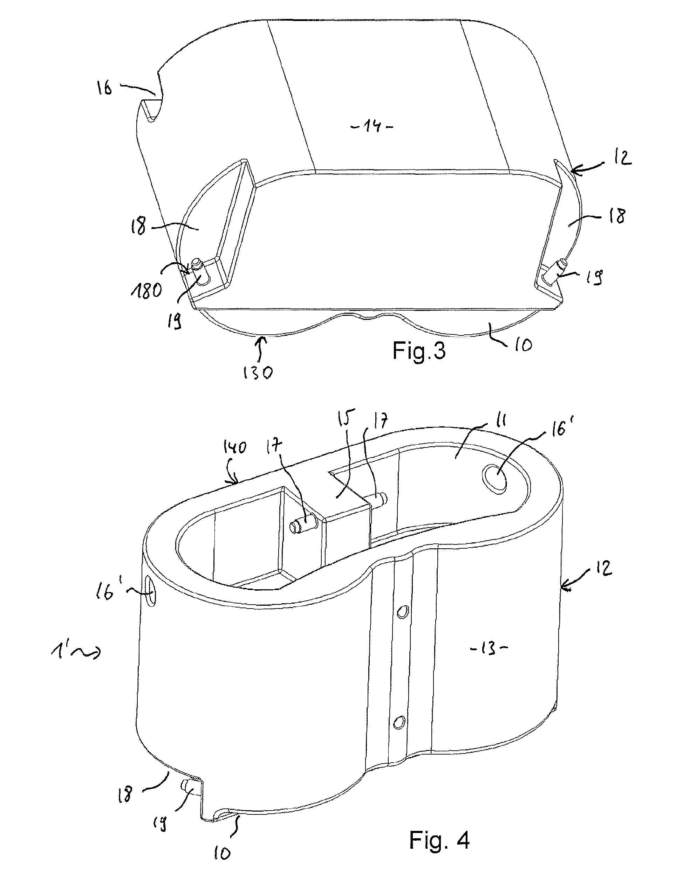

Dans un deuxième mode de réalisation des réservoirs 1' selon l'invention, représenté sur la figure 4, l'échancrure est remplacée par un tunnel 16' de section circulaire dans lequel les tuyaux d'évent 3 peuvent passer.

Les réservoirs 1, 1' peuvent servir pour former des aménagements décoratifs dans un jardin. Leur forme permet une liberté pour les juxtaposer en alignement selon l'imagination de l'utilisateur, à la fois dans un plan horizontal, mais aussi par superposition à différentes altitudes. Les réservoirs 1, 1' peuvent ainsi former des bordures, ou des ilots floraux.

## Revendications

1. Système de réserve d'eau, en particulier d'eau de pluie, comportant au moins un alignement de réservoirs (1) connectés entre eux, **caractérisé en ce que** chaque réservoir (1) comporte en partie supérieure un bac (11) apte à contenir un substrat et des plantes, l'alignement comportant une face latérale apparente (13) et une face latérale de soutènement (14), opposée à la face latérale apparente (13), en contact avec le terrain naturel.

2. Système selon la revendication 1, dans lequel les réservoirs (1) sont connectés entre eux par un réseau d'alimentation en eau et par un réseau d'évent.

3. Système selon la revendication 2, dans lequel le réseau d'alimentation comporte un système de connexion (19, 2) pour connecter deux réservoirs (1) adjacents en partie inférieure, le système de connexion comportant un manchon d'alimentation (19) faisant saillie d'une paroi du réservoir (1) et un tuyau d'alimentation (2) emmanché à chaque extrémité sur le manchon d'alimentation (19) de l'un des réservoirs (1).

4. Système selon la revendication 3, selon lequel les réservoirs (1) comportent un évidement (18) dans lequel le manchon d'alimentation (19) fait saillie, le tuyau étant apte à se loger dans les évidements (18) de deux réservoirs (1) juxtaposés.

5. Système selon la revendication 4, dans lequel l'évidement (18) est réalisé à un angle inférieur d'une face d'extrémité (12) du réservoir (1).

6. Système selon la revendication 4, dans lequel l'évidement (18) comporte une face de support (180) orientée vers le côté de la face de soutènement (14) et portant le manchon d'alimentation (19).

7. Système selon la revendication 2, dans lequel le réseau d'évent comporte un système de connexion d'évent pour connecter deux réservoirs (1) adjacents, le système de connexion d'évent comportant au moins un manchon d'évent (17) faisant saillie dans le bac (11) et un tuyau emmanché à chaque extrémité sur le manchon d'évent (17) de l'un des réservoirs (1).

8. Système selon la revendication 7, selon lequel les réservoirs (1) comportent un passage entre une face d'extrémité (12) et le bac (11), le tuyau étant apte à se loger dans les passages de deux réservoirs (1) juxtaposés.

9. Système selon la revendication 8, selon lequel le passage a la forme d'une échancrure (16) ou d'un tunnel (16').

10. Système selon la revendication 1, dans lequel le réservoir (1) d'une rangée supérieure comporte une feuillure (10) le long d'un bord inférieur de la face apparente (13), une arête d'un réservoir (1) de la rangée adjacente inférieure étant placée dans ladite feuillure (10).

11. Réservoir, **caractérisé en ce qu'**il comporte en partie supérieure un bac (11) apte à contenir un substrat et des plantes, une face latérale apparente (13) et une face latérale de soutènement (14), opposée à la face latérale apparente (13), la face latérale de soutènement (14) étant destinée à être en contact avec le terrain naturel, et **en ce qu'**il est adapté pour la réalisation d'un système selon l'une des revendications 1 à 10.
